**Europäisches Patentamt**

**European Patent Office**

**Office européen des brevets**

(19)

(11) Numéro de publication : **0 319 396 B1**

(12) # FASCICULE DE BREVET EUROPEEN

(45) Date de publication du fascicule du brevet :
**25.03.92 Bulletin 92/13**

(51) Int. Cl.$^5$ : **G01B 11/26**

(21) Numéro de dépôt : **88402999.2**

(22) Date de dépôt : **29.11.88**

(54) **Source lumineuse pour détecteur optique et dispositif optique de mesure mettant en oeuvre cette source.**

(30) Priorité : **30.11.87 FR 8716569**

(43) Date de publication de la demande :
**07.06.89 Bulletin 89/23**

(45) Mention de la délivrance du brevet :
**25.03.92 Bulletin 92/13**

(84) Etats contractants désignés :
**DE ES GB IT NL SE**

(56) Documents cités :
**WO-A-88/08953**
**DE-A- 3 311 945**
**FR-A- 2 322 356**
**US-A- 4 330 212**

(73) Titulaire : **AEROSPATIALE Société Nationale Industrielle**
**37, Boulevard de Montmorency**
**F-75781 Paris Cédex 16 (FR)**

(72) Inventeur : **Singer, Christian**
**23, Avenue du Campon**
**Les Azuréa F-06110 Le Cannet (FR)**
Inventeur : **Cerutti-Maori, Guy**
**50 Boulevard du Soleil**
**F-06150 Cannes la Bocca (FR)**

(74) Mandataire : **Rinuy, Santarelli**
**14, avenue de la Grande Armée**
**F-75017 Paris (FR)**

EP 0 319 396 B1

**Description**

La présente invention concerne une source lumineuse pour détecteur optique et un dispositif optique de mesure mettant en oeuvre une telle source.

Le domaine général de la présente invention est celui de la mesure de la position d'un corps, en particulier la position angulaire d'un tel corps par rapport à un référentiel de référence, en pratique un plan de référence, cette position étant mesurée par la ou les positions relatives de tâches lumineuses provenant de la source, sur un élément linéaire de détection.

On connaît, notamment, par le brevet français FR-A-2322356 une source lumineuse susceptible d'être utilisée dans un détecteur optique du genre de celui succinctement rappelé ci-dessus.

La source lumineuse décrite dans ce document est en forme de V. L'image de cette source est dirigée, par exemple au moyen d'un ensemble optique, sur un élément linéaire de détection, réalisé le plus souvent au moyen d'une barrette CCD (CCD : initiales de Charge Coupled Device, barrette CCD : barrette d'éléments photosensibles à transfert de charge. Dans la suite de la présente description, on utilisera l'expression "barrette CCD"). Cette barrette est disposée de façon à être perpendiculaire à l'axe de symétrie de l'image de la source lumineuse en V. La barrette détecte la position de tâches lumineuses qui sont en fait constituées par l'intersection de l'image des branches du V lumineux avec cette barrette.

En pratique les dispositions suivantes peuvent être adoptées :
– la source peut être fixe par rapport au référentiel de référence et la barrette montée sur l'objet dont on souhaite mesurer la position angulaire.
– la source peut être montée sur l'objet dont on souhaite mesurer la position angulaire et la barrette fixe par rapport au référentiel de référence,
– la barrette et la source peuvent être montées soit sur l'objet dont on souhaite mesurer la position angulaire tandis qu'un miroir relais est monté fixe par rapport au référentiel de référence, soit, à l'inverse, la barrette et la source sont fixes par rapport au référentiel de référence, tandis qu'un miroir relais est monté sur l'objet dont on souhaite mesurer la position angulaire.

Dans tous les cas la position relative des tâches lumineuses mentionnées ci dessus, sur la barrette, donne les indications suivantes :
– leur écart sur cette barrette mesure l'angle de rotation de l'objet autour d'un axe parallèle à celui de la barrette,
– le barycentre entre les deux tâches lumineuses mesure la rotation de l'objet autour d'un axe perpendiculaire à celui de la barrette.

Ces sources, et les dispositifs de mesure dans lesquelles elles sont mises en oeuvre, présentent, dans certaines applications, des inconvénients.

La demanderesse a cherché à utiliser de telles sources avec des optiques de précision disposées entre la source et l'élément linéaire de détection. Or dans certaines applications, et notamment, celles pour lesquelles la demanderesse a entrepris des études qui ont abouti à la présente invention, il est requis à la fois une grande précision de mesure et une grande amplitude de l'échelle angulaire mesurée. En pratique cela entraîne l'emploi d'une source lumineuse en V de hauteur importante et, par conséquent, l'emploi d'un ou de plusieurs ensembles optiques présentant un champ angulaire particulièrement important, la grandeur du champ étant liée au diamètre du cercle passant par la pointe du V et l'extrémité opposée de ses deux branches.

Or on sait que le coût d'une optique est d'autant plus important que son champ angulaire est grand.

Ainsi, d'une part pour des raisons économiques, liées au coût de telles optiques, la demanderesse s'est aperçu qu'il est souhaitable de pouvoir disposer d'une source lumineuse, susceptible de permettre la mesure de la position angulaire d'un objet, par rapport à un plan de référence, au moyen d'un élément de détection linéaire, tout en minimisant, ou, à tout le moins, en optimisant le champ de l'optique utilisée.

D'autre part, la demanderesse a constaté qu'il est souhaitable, dans certaines applications, de réduire la taille de la source lumineuse, dans l'une au moins de ses dimensions, de façon à réduire l'encombrement d'une telle source. Un tel avantage est particulièrement intéressant, lors de l'emploi de sources lumineuses et de détecteurs optiques du type précité dans des satellites où un gain de place, se traduit par un gain économique non négligeable.

Aussi la présente invention vise notamment une source :
– qui, à taille équivalente, de celle de l'art antérieur, est susceptible d'être utilisée avec un objectif à champ plus faible et, par conséquence moins cher,
– et qui est susceptible de présenter, pour une même précision et une même amplitude de mesure que celle de l'art antérieur, un encombrement plus réduit dans une dimension au moins.

A cet effet, la source lumineuse selon l'invention qui se présente sous forme d'une figure géométrique plane comportant une courbe symétrique par rapport à un axe, est notamment caractérisée en ce que cette courbe est également symétrique par rapport à un autre axe et présente, au moins une première épaisseur d'un côté d'une premier des deux axes, et au moins une seconde épaisseur de l'autre côté de cet axe.

La présente invention vise également un dispositif optique de mesure de la position d'un corps, comportant au moins une source lumineuse, un ensemble optique et un élément linéaire de détection dans lequel la position du corps est mesurée par la position d'au moins une tâche lumineuse, provenant de la source lumineuse, sur l'élément linéaire de détection, l'ensemble optique recevant directement ou indirectement la lumière issue de la source pour la transmettre, directement ou indirectement vers l'élément linéaire de détection, ce dispositif étant caractérisé en ce que la source lumineuse est conforme aux enseignements rappelés au paragraphe précédent.

Grâce à ces dispositions, les inconvénients rappelés ci-dessus sont palliés.

En effet, la source lumineuse en V est remplacée par une source se présentant sous forme d'une figure géométrique plane comprenant une courbe qui est non seulement symétrique par rapport à un axe vertical, comme dans le cas du V, mais qui, en plus, est symétrique par rapport à un deuxième axe, horizontal celui-là.

La courbe qui, dans un mode préféré de réalisation particulièrement avantageux, est un losange, et, plus précisément un carré, peut présenter une hauteur totale égale à celle du V, de telle sorte que la précision de la mesure de l'angle de rotation de l'objet autour d'un axe parallèle à celui de la barrette est la même que dans le cas d'un V de hauteur semblable.

D'un autre côté, la largeur de ladite courbe symétrique peut être la même que celle de la base du V, de telle sorte que la précision de mesure de l'angle de rotation de l'objet autour d'un axe perpendiculaire à la barrette de détection, reste la même.

Cependant, on observera que le cercle passant par les deux points de plus grande largeur ou de plus grande hauteur de la figure symétrique (en l'espèce deux sommets opposés du losange), est de diamètre plus faible que le cercle passant par la pointe du V et l'extrémité opposée de ses deux branches. Par conséquent, pour des amplitudes de mesures équivalentes, le champ de l'optique nécessaire est réduit, ce qui entraîne une diminution sensible du coût de l'optique.

Par ailleurs, l'encombrement physique de la source lumineuse selon l'invention, dépend lui aussi du diamètre du plus grand des deux cercles mentionnés plus haut, et comme l'un et l'autre de ces deux cercles sont plus faibles que le cercle passant par le sommet du V et l'extrémité opposée de ses deux branches, il s'ensuit que l'encombrement de la source lumineuse selon l'invention, est sensiblement diminué par rapport à l'encombrement du V de l'art antérieur.

De façon à encore mieux optimiser le champ de l'optique utilisé, la présente invention vise deux variantes de réalisation de la source succinctement exposée plus haut.

Selon une variante, la source présente, de part et d'autre du second axe des épaisseurs distinctes.

Selon une autre variante, la figure géométrique formée par la source lumineuse comporte en outre un segment rectiligne d'épaisseur prédéterminée différente desdites épaisseurs, joignant, le long desdits axes de symétrie, les deux points d'intersection de la courbe avec ledit axe.

Les avantages de l'une et l'autre de ces variantes ressortiront de la description qui va suivre à l'appui des dessins annexés.

Selon un mode de réalisation préféré, la source lumineuse, qui est conforme aux enseignements ci-dessus, comporte une source primaire de lumière éclairant un masque ajouré selon une figure telle que succinctement décrit ci-dessus.

Ces dispositions permettent une réalisation particulièrement simple et économique de la source lumineuse selon l'invention.

Avantageusement le dispositif optique de mesure selon l'invention, est caractérisé en ce qu'en outre, d'une part, l'élément linéaire est disposé de telle sorte que, dans une position dite neutre du corps, l'image dudit premier axe soit colinéaire avec l'élément linéaire, et en ce que, d'autre part, ce dispositif comporte des moyens de mesure pour :

– détecter la position des points d'intersection de l'image de la courbe et, le cas échéant, de celle du segment avec le capteur linéaire,

– mesurer l'épaisseur desdits points d'intersection et des moyens de calculs raccordés aux moyens de mesure.

Ces dispositions permettent, notamment, une mise en oeuvre particulièrement aisée de la source et du dispositif succinctement décrits plus haut.

Dans un mode de réalisation préféré du dispositif selon l'invention, un miroir relais plan est monté dans le corps tandis qu'un ensemble optique est disposé entre le miroir et l'élément linéaire, le dispositif comportant en outre une lame semi-réfléchissante adaptée, d'une part, à réfléchir une partie de la lumière issue de la source vers l'ensemble optique, et, d'autre part, à laisser passer vers le capteur une partie de la lumière en provenance de l'ensemble optique.

Ces dispositions permettent une mise en oeuvre facile d'un dispositif de mesure de la position angulaire d'un corps, par rapport à un plan de référence, aucune source d'énergie n'étant nécessaire sur ce corps, tandis que l'encombrement et le coût de la source et de l'optique solidaire, diminuent sensiblement par rapport à un dispositif de l'art antérieur faisant appel à d'autres techniques de mesure, les performances étant, quant à elles largement améliorées.

Les caractéristiques et avantages de l'invention ressortiront d'ailleurs de la description qui va suivre en référence aux dessins annexés sur lesquels :

– la figure 1 est un schéma de principe d'un mode préféré de réalisation d'un dispositif optique de mesure conforme à l'invention.

– la figure 2 est une vue en élévation d'une source lumineuse conforme à l'invention,

– la figure 3 est une vue schématique en élévation d'une image de cette même source, dans le plan d'un élément linéaire de détection,

– la figure 4 est une vue schématique, correspondant à la figure 3, illustrant une variante de réalisation,

– la figure 5 illustre de façon schématique un mode de réalisation préféré de la source de la figure 2, et

– la figure 6 est une vue en élévation d'une autre variante de réalisation de la source illustrée en figure 2.

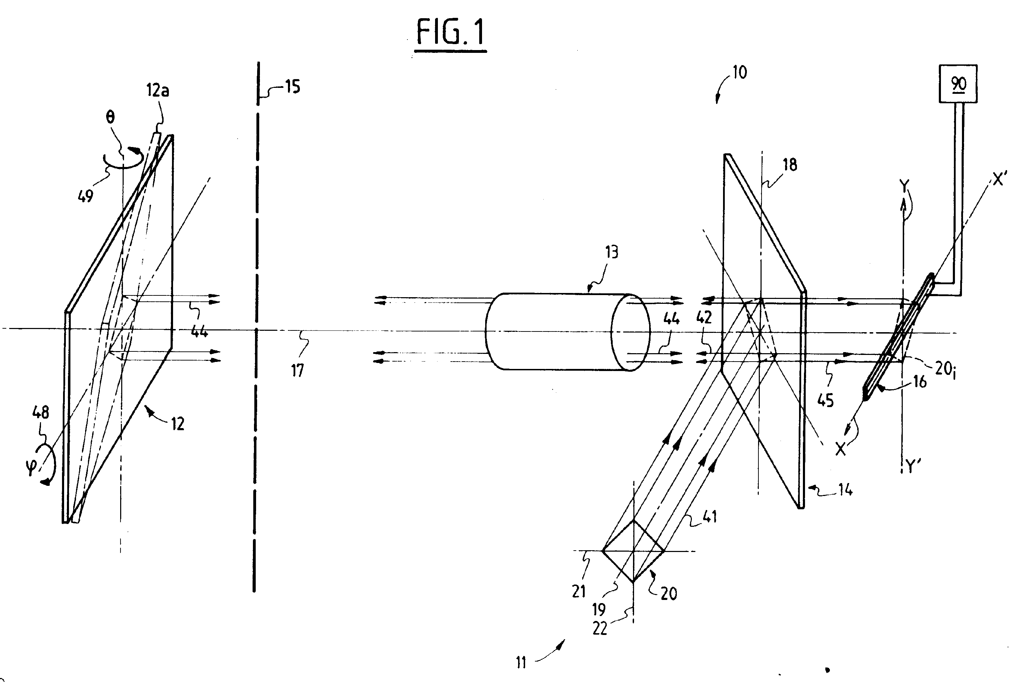

Selon la forme de réalisation choisie et représentée en figure 1, le dispositif de mesure, référencé d'une manière générale en 10, comporte d'une part, un ensemble d'éléments 11 monté à poste fixe. Le dispositif 10 de mesure comporte, d'autre part, un miroir relais 12 monté sur l'objet dont on souhaite mesurer la position angulaire dans l'espace par rapport au référentiel constitué par l'ensemble d'éléments 11 montés à poste fixe.

Une application possible de ce dispositif est le réglage et le pointage d'antenne parabolique. Dans un tel cas le miroir relais 12 est monté sur l'antenne parabolique, le plus près possible de son centre, tandis que l'ensemble des éléments représentés sous la référence 11 sont montés à poste fixe par exemple sur le support de l'antenne. Il est ainsi possible, ainsi qu'il ressortira de la description qui va suivre, de mesurer la position angulaire du miroir relais et, par conséquent de l'antenne, par rapport au référentiel constitué alors par le support de cette antenne.

Une telle application est intéressante notamment s'agissant d'une antenne embarquée à bord d'un satellite.

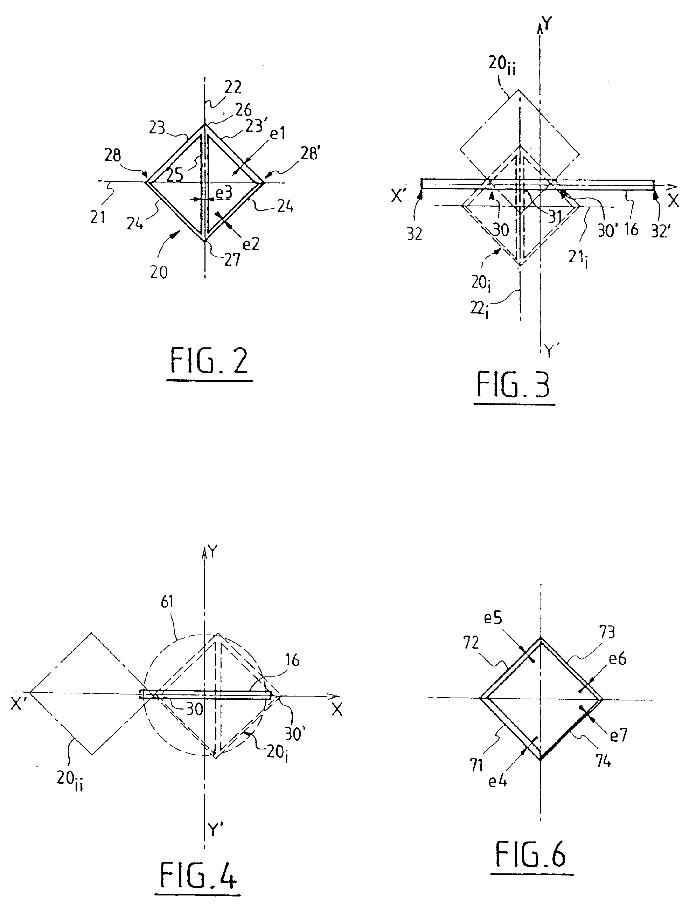

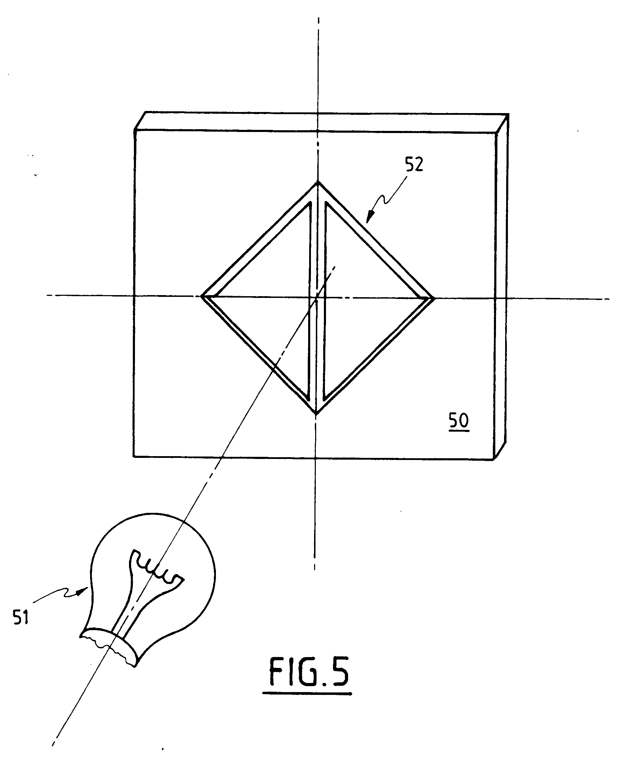

Dans la forme de réalisation décrite et représentée, l'ensemble d'éléments 11 comporte une source lumineuse 20, qui sera décrite plus en détail à l'appui des figures 2 à 5, une lame semi-réfléchissante 14, un ensemble optique 13 et un élément linéaire de détection 16, en l'espèce une barrette CCD.

Sur la figure 1, on a représenté, sous la référence θ un axe vertical de rotation du miroir 12. On observe que cet axe de rotation est parallèle à un axe y'y passant par le centre de l'élément linéaire de détection 16. On a également représenté sous la référence φ un axe perpendiculaire à l'axe θ . L'axe φ intercepte l'axe θ au centre du miroir relais 12. On observe ici également que cet axe est parallèle à un axe x'x colinéaire à l'élément linéaire de détection 16. Les axes φ,θ définissent un plan de référence, fixe par rapport à l'ensemble des éléments 11, les rotations du miroir relais 12 autour des axes φ, θ étant mesurées comme expliqué plus loin.

On observe sur la figure 1 que l'optique 13 est colinéaire à un axe 17 joignant le point d'intersection des axes φ , θ et celui des axes x'x et y'y.

On a représenté sous la référence 18 un axe parallèle à l'axe y'y, appartenant au plan de la lame semi-réfléchissante. Cette lame semi-réfléchissante est inclinée à 45° par rapport à l'axe 17 et à 45° par rapport à un axe 19 joignant le centre de symétrie de la source 20 (ce dernier étant défini plus loin à l'appui de la figure 2) au point d'intersection des axes 17 et 18.

Enfin, on a illustré schématiquement sous la référence 15 une frontière séparant les éléments fixes 11 du miroir mobile 12.

Hormis la source 20 qui, elle, appartient au domaine de l'invention, l'ensemble des autres éléments de la figure 1 décrits jusqu'à présent sont bien connus de l'homme de l'art. Il est donc inutile de les décrire plus en détail ici.

Cependant, on observera que, conformément à la présente invention, l'ensemble optique 13 est réalisé de telle sorte qu'il présente un champ au moins égal à la plage angulaire de mesure des variations de la position angulaire du miroir 12, la pupille de l'optique étant placée sur le plan défini par les axes θ, φ (position neutre du miroir), le plan x'x - y'y étant quant à lui un plan image.

Par ailleurs des moyens de calcul 90 sont raccordé à l'élément 16.

La figure 2 illustre d'une part, un mode de réalisation particulièrement simple de la source conforme à l'invention et, d'autre part, une variante de ce mode de réalisation permettant de diminuer le champ de l'optique.

D'une manière générale, conformément à l'invention, la source 20 se présente sous forme d'une figure géométrique lumineuse plane comportant une courbe symétrique par rapport à un axe, cette courbe étant de surcroît symétrique par rapport à un autre axe, tandis qu'elle présente une première épaisseur d'un côté de l'un des axes et une seconde épaisseur de l'autre côté de cet axe.

Dans le mode de réalisation choisi et représenté, la courbe symétrique est un losange, et, plus précisément ici, un carré, dont les côtés ont été référencés respectivement en 23, 23', 24, 24'. Cette courbe est donc symétrique par rapport à un axe, en l'espèce l'axe vertical 22 et symétrique par rapport à un autre axe, en l'espèce l'axe horizontal 21.

Conformément à la caractéristique de l'invention rappelée ci-dessus, la courbe lumineuse dessinant ce losange présente une première épaisseur $e_1$ d'un côté d'un premier des deux axes, ici l'axe horizontal 21 et une seconde épaisseur $e_2$ de l'autre côté de cet axe. En l'espèce, on observe qu'effectivement les traits dessinant les côtés lumineux 23, 23' présentent une épaisseur $e_1$ tandis que les traits dessinant les côtés lumineux 24, 24' présentent une épaisseur $e_2$.

Les traits lumineux 23, 23', 24, 24' peuvent être réalisés de toute façon connue de l'homme de l'art.

En figure 5, il est illustré le mode de réalisation suivant : la source lumineuse comporte essentiellement une source primaire lumineuse 51 constituée par des diodes électro-luminescente de type STANLEY H. 2000. Cette source primaire lumineuse 51 éclaire un masque opaque 50 présentant une série d'ajours référencés en 52 reproduisant la forme décrite à l'appui de la figure 2. Ce mode de réalisation particulièrement simple permet de garantir qu'effectivement les traits lumineux 23, 23′ ,24, 24′ présentent des épaisseurs distinctes et prédéterminées, conformément à l'invention, la raison d'être de ces caractéristiques étant explicitée ci-après.

On observe également que la source lumineuse illustrée en figure 2 comporte un cinquième trait lumineux vertical 25. Ce trait lumineux 25, d'épaisseur $e_3$, met en oeuvre une variante de l'invention expliquée plus loin.

Le fonctionnement de la source lumineuse constituée par des traits lumineux 23, 23′, 24, 24′ va maintenant être expliqué à l'appui des figures 1 à 3.

En se reportant à la figure 1, la source lumineuse 20, qui n'a été représentée que schématiquement sur cette figure, émet un signal lumineux en direction de la lame semi-réfléchissante 14, comme illustré schématiquement par les flèches 41.

La lame 14 étant une lame semi-réfléchissante, une partie de la lumière traverse cette lame et est perdue.

Une autre partie de la lumière se trouve réfléchie en direction de l'optique 13, comme illustré par les flèches 42. La lumière traverse l'optique 13. Le miroir 12 renvoie la lumière (flèches 44) qui traverse à nouveau l'optique et qui traverse la lame semi-réfléchissante (flèche 45). Une image $20_i$ se forme dans le plan x'x - y'y.

On conçoit que si le miroir 12 se trouve dans le plan des axes θ, φ, comme illustré en traits pleins sur la figure 1, l'image formée dans le plan x-y sera un carré dont les axes images des axes 21, 22 seront colinéaires avec les axes xx' et y'y.

Si on bascule le miroir 12 en lui faisant faire une rotation de quelques degrés autour des axes θ, φ, l'image dans le plan x-y sera celle d'un carré mais dont les axes images des axes 21, 22 seront décalés par rapport aux axes xx″ et y'y. Un tel cas a été illustré en figure 3.

Sur cette figure, on reconnaît les axes xx' et y'y ainsi que le détecteur linéaire, qui, dans ce mode de réalisation, est constitué par une barrette CCD. Ce détecteur linéaire présente deux extrémités respectivement référencées en 32, 32′.

Sous la référence $20_i$, il a été illustré une image de la source 20. Cette image est dessinée en traits interrompus. Les images des axes 21 et 22 de la source 20 ont été représentées et référencées respectivement en $21_i$ et $22_i$. On observe que dans l'exemple choisi, l'image $20_i$ est décalée vers le bas et la gauche de la figure, ce qui correspond à une rotation du miroir autour des axes θ, φ comme suit :
– dans le sens inverse des aiguilles d'une montre autour de l'axe θ et,
– dans le sens des aiguilles d'une montre autour de l'axe φ.

La position correspondante du miroir 12 a été esquissée à la figure 1, en traits mixtes, sous la référence 12a, les sens de rotation étant respectivement schématisés par les flèches 48 et 49.

Il y a en effet une liaison univoque entre la position du miroir 12 et celle de l'image $20_i$ de la source 20 :
– une rotation du miroir 12 autour de l'axe θ correspondant à un déplacement de l'image $20_i$ le long de l'axe x'x,
– une rotation du miroir 12 autour de l'axe φ correspond à un déplacement de l'image $20_i$ le long de l'axe y'y.

En prenant pour hypothèse que le champ de l'optique englobe l'ensemble de la barrette 16 et que les débattements du miroir autour des axes θ , φ sont limités de telle sorte que l'image $20_i$ coupe toujours la barrette 16, l'épaisseur et la position des points d'intersection entre l'image $20_i$ et la barrette 16, (ces points d'intersection étant référencés en 30, 30′, en figure 3) donnent une mesure des rotations autour des axes du miroir comme expliqué ci-après.

On observera tout d'abord que les points d'intersection 30, 30′ correspondent à l'intersection :
– soit de l'image des traits lumineux 23, 23′ avec l'axe x'x,
– soit de celle des traits lumineux 24, 24′ avec l'axe x'x.

Cette intersection se traduit physiquement par des tâches lumineuses sur la barrette CCD. Or ces tâches lumineuses éclairent un certain nombre de pixels de la barrette aux endroits correspondant auxdites intersections.

Les informations concernant le nombre et la situation des pixels éclairés sont transmises aux moyens de calcul 90 qui interprètent ces informations comme suit :

La valeur absolue de l'écart entre les points 30, 30′ est fonction de la position de l'image $20_i$ le long de l'axe y'y et donc de la rotation du miroir autour de l'axe φ. Ainsi plus la valeur de l'angle φ augmente, plus les points 30,30′ se rapprochent, l'angle φ étant nul lorsque les points 30, 30′ correspondent à l'image des points 28, 28′ de la source.

Il existe cependant une incertitude sur le signe de l'angle autour de l'axe φ. En effet, lorsque des taches lumineuses 30, 30′ sont détectées par la barrette 16, elles peuvent correspondent à une position de l'image telle qu'illustrée en $20_i$ ou à une position de cette image telle qu'illustrée sous la référence $20_{ij}$.

Selon l'invention cette incertitude est levée grâce à la caractéristique de l'invention selon laquelle les traits lumineux 23, 23′, d'une part et 24, 24′, d'autre part présentent des épaisseurs distinctes,

Ainsi, dans la position illustrée sous la référence $20_i$ de l'image de la source 20, les tâches lumineuses 30, 30′ présenteront une aire relativement importante liée à l'épaisseur $e_1$ des traits lumineux 23, 23′ et, par conséquent, un nombre important de pixels, compris dans une fourchette prédéterminée, se trouvera éclairé. En revanche dans la position de l'image illustrée sous la référence $20_{ii}$, les tâches lumineuses situées au même endroit présenteraient une aire beaucoup plus faible puisque liée à l'épaisseur $e_2$ des branches 24, 24′, plus faible que l'épaisseur $e_1$ des branches 23, 23′ de la source lumineuse 20, et un nombre plus faible de pixels compris dans une seconde fourchette prédéterminée, se trouverait éclairé.

Les détecteurs optiques linéaires actuellement sur le marché, et notamment la barrette CCD utilisée dans le présent mode de réalisation, qui est ici du type FAIRCHILD 143 de 2048 pixels, présente une résolution suffisante 13 μm permettant de distinguer entre une tâche lumineuse de surface liée à l'épaisseur $e_1$ et une tâche lumineuse liée à l'épaisseur $e_2$.

A titre d'exemple, on observera que dans le mode de réalisation choisi et représenté, la source lumineuse est constituée par un carré présentant des côtés 23, 23′, 24, 24′ ayant une longueur de 18 μm, les épaisseurs $e_1$ et $e_2$ étant respectivement de 145μm, et de 90 μm.

Dans une telle hypothèse, la barrette CCD étant du type FAIRCHILD 143, le nombre de pixels éclairés est respectivement 11 d'une part, et 7 d'autre part.

La position des tâches lumineuses 30, 30′ et plus particulièrement la position du barycentre de ces tâches le long de l'élément linéaire de détection 16, donne une mesure de la rotation du miroir autour de l'axe θ .

On observera que la source lumineuse 20 permet de mesurer des débattements angulaires autours des axes θ, φ de même amplitude totale qu'une source lumineuse conforme à l'art antérieur, en forme de V, dont la hauteur serait identique à la hauteur du losange (en l'espèce à la diagonale du carré : distance entre les points 26 et 27) et dont la base serait égale à la largeur de ce losange (en l'espèce à la diagonale du carré entre les points 28 et 28′). Cependant, dans une telle hypothèse, l'optique 13 devrait présenter un champ angulaire dont la grandeur serait au moins telle qu'il devrait englober au moins un cercle passant par le sommet du V et l'extrémité opposée de ses deux branches, tandis que dans le cas présent, l'optique 13 n'a à prendre en compte qu'un champ englobant un cercle dont le diamètre est égal à la diagonale du carré, par conséquent, sensiblement plus petit que le cercle sus-mentionné.

De plus, si on observe que l'encombrement global de la source lumineuse 20 est lui aussi fonction, dans le cadre de l'art antérieur, du cercle passant par le sommet du V et l'extrémité opposée de ses deux branches, et, dans le cadre de l'invention, du cercle dans lequel est inscrit le carré, il vient que, à plages angulaires de mesures équivalentes, l'encombrement de la source décrite dans la présente demande est sensiblement plus faible que celui d'une source équivalente conforme aux enseignements de l'art antérieur.

On va maintenant décrire une variante de l'invention permettant de réduire sensiblement le champ de l'optique devant être utilisée et d'augmenter la plage angulaire de mesure.

D'une manière générale, selon cet aspect de l'invention, la figure géométrique comporte en outre un segment rectiligne d'épaisseur prédéterminée différente desdites épaisseurs, joignant, le long de l'un desdits axes de symétrie, les deux points d'intersection de la courbe avec ledit axe.

Cette variante est également illustrée en figure 2 et elle est constituée par un cinquième trait lumineux, portant la référence 25 sur cette figure, ce trait lumineux présentant une épaisseur $e_3$ distincte des épaisseurs $e_1$ et $e_2$. On observe que le trait lumineux 25 s'étend le long de la diagonale 26, 26′ du carré. Cette diagonale étant colinéaire à l'axe 22, les points 26, 26′ représentent l'intersection de la courbe constituée par les traits 23, 23′ 24, 24′ avec cet axe. Une telle source eut être utilisée avec une optique dont le champ, dans le plan x-y est limité à un cercle, référencé en 61 en figure 4, ce cercle ayant un diamètre égal à la largeur de l'image de la source 20 (cette largeur correspondant à l'image de la diagonale 28, 28′).

Tant que l'angle du miroir 12 autour de l'axe est sensiblement différent de zéro, la source fonctionne comme expliqué précédemment, à ceci près que l'intersection 31 de l'image du segment lumineux 25 avec la barrette 16 correspond à la position moyenne tâche lumineuse 30, 30′, et qu'ainsi, par conséquent, les moyens de calcul 90 n'ont pas à calculer cette position mais simplement à prendre en compte la position de la tâche lumineuse 31, celle-ci présentant d'ailleurs une aire différente des autres tâches puisque le segment lumineux 25 présente une épaisseur différente des autres segments lumineux.

En revanche, dès que l'angle de rotation autour de l'axe φ du miroir s'approche de zéro, il existe une zone d'incertitude illustrée en figure 4. En effet, sur cette figure on a représenté une image $20_i$ sensiblement décalée vers la droite, correspondant à un angle θ négatif et à un angle φ égal à 0. On observe que si la tâche 30 se trouve à l'intérieur du champ de l'objectif, il n'en est pas de même de l'intersection 30′ de l'image de la source avec l'axe x′x. Par conséquent, le point 30′ ne peut être une tâche lumineuse et même si la barrette 16 couvrait ce point il n'y aurait pas de signal correspondant. Aussi les moyens de calcul 90 se trouvent dans ce cas face à une alternative où l'image de la source correspond à celle illustrée en $20_i$

ou elle correspond à celle illustrée en $20_{ii}$ sur cette même figure.

Selon la variante de l'invention présentement décrite cette incertitude est levée par la présence de l'image du trait lumineux 25 et, plus précisément, par la présence de la tâche lumineuse 31 représentant l'intersection du trait lumineux 25 avec la barrette CCD 16.

On observe ainsi que l'on peut utiliser, grâce à cette variante, un objectif dont le champ est limité dans le plan x-y à la taille de l'image de la source 20.

En figure 6, il est illustré un autre mode de réalisation d'un masque permettant de lever la zone d'incertitude illustrée en figure 4. On observe que cette source lumineuse présente, dans cette variante, quatre segments 71-74 d'épaisseur distincte ($e_4 - e_7$).

Ainsi, l'image de chacun des quatre segments lumineux présente une largeur différente ce qui entraîne que dans chacun des quatre cas un nombre différent de pixels de la barrette CCD est éclairée, ce qui permet de reconnaitre l'image du segment en intersection avec la barrette CCD. De la sorte on peut lever l'incertitude illustrée en figure 4. En effet, suivant que la tâche lumineuse présente telle ou telle épaisseur, on peut déterminer quel est le segment 71-74 dont l'image vient en intersection avec l'axe des x sur la barrette CCD.

Il va de soi que la présente invention n'a été décrite qu'à titre indicatif mais nullement limitatif et que l'invention est susceptible de nombreuses variantes sans sortir de son cadre.

En particulier, notamment dans certaines hypothèses où la largeur de la source doit être limitée, il pourra être préférable d'utiliser une forme de courbe en losange relativement étroit.

Par ailleurs, les traits lumineux 23, 24 n'ont pas forcément être rectilignes. Au contraire, dans certaines applications, il pourra s'avérer utile d'utiliser une source conforme à l'invention dont l'équivalent des traits lumineux 23, 23', 24, 24' sera curviligne.

De même, toute forme de courbe symétrique du moins par rapport à deux axes peut convenir.

## Revendications

1. Source lumineuse pour détecteur optique de position d'un corps, cette dernière étant mesurée par la ou les positions relatives de tâches lumineuses provenant de la source sur un élément linéaire de détection, source se présentant sous forme d'une figure géométrique lumineuse plane comportant une courbe (23, 23', 24, 24' ; 71, 72, 73, 74) symétrique par rapport à un axe (22), caractérisée en ce que cette courbe est symétrique par rapport à un autre axe (21) et présente au moins une première épaisseur ($e_1$) d'un côté d'un premier (21) des deux axes, et au moins une seconde épaisseur ($e_2$) de l'autre côté de cet axe.

2. Source lumineuse selon la revendication 1, caractérisée en ce qu'en outre, de part et d'autre du second axe (22), ladite courbe présente des épaisseurs distinctes ($e_4 - e_7$).

3. Source lumineuse selon l'une quelconque des revendications 1, 2, caractérisée en ce que la figure géométrique comporte en outre un segment rectiligne (25) d'épaisseur prédéterminée ($e_3$) différente desdites épaisseurs ($e_1 - e_2$), joignant, le long de l'un desdits axes (22) de symétrie, les deux points d'intersection (26, 27) de la courbe avec ledit axe.

4. Source lumineuse selon l'une quelconque des revendications 1 à 3, caractérisée en ce que ladite courbe est un losange.

5. Source lumineuse selon l'une quelconque des revendications 1 à 4, comportant une source primaire de lumière éclairant un masque (50) ajouré selon une figure (52) conforme aux enseignements de l'une quelconque des revendications précitées.

6. Dispositif optique de mesure de la position d'un corps comportant au moins une source lumineuse, un ensemble optique et un élément linéaire de détection dans lequel la position du corps est mesurée par la position d'au moins une tache lumineuse, provenant de la source lumineuse, sur l'élément linéaire de détection, l'ensemble optique recevant directement ou indirectement la lumière issue de la source pour la transmettre, directement ou indirectement vers l'élément linéaire de détection, caractérisé en ce que la source lumineuse (20) est conforme aux enseignements de l'une quelconque des revendications 1 à 5.

7. Dispositif selon la revendication 6, dans lequel un miroir relais plan (12) est monté sur le corps, caractérisé en ce qu'en outre l'élément linéaire (16) :

– est disposé de telle sorte que, dans une position dite neutre du corps, l'image dudit premier axe (21) soit colinéaire avec l'élément linéaire (16),

– détecte la position des points d'intersection (30, 30') de l'image ($20_i$) de la courbe (23, 23', 24, 24' ; 71, 72, 73, 74) et, le cas échéant, de celle (31) du segment (25),

– mesure l'épaisseur ($e_1 - e_7$) desdits points d'intersection,

– et est raccordé à des moyens de calcul (90).

8. Dispositif selon la revendication 7, comportant en outre un ensemble optique (13) disposé entre le miroir (12) et l'élément linéaire (16) et une lame semi-réfléchissante (14) adaptée, d'une part, à réfléchir une partie de la lumière issue de la source (20) vers l'ensemble optique (13), et d'autre part, à laisser passer vers le capteur (16) une partie de la lumière en provenance de l'ensemble optique.

9. Dispositif selon l'une quelconque des revendications 6 à 8, caractérisé en ce que l'élément linéaire et les moyens de mesure sont, partiellement au moins, constitués par une barrette d'éléments photosensibles à transfert de charge.

**Patentansprüche**

1. Leuchtende Quelle für einen optischen Detektor zur Feststellung der Lage eines Körpers, wobei diese Lage durch die Relativlage(n) von von der Quelle kommenden Lichtflecken auf einem linearen. Fühlerelement gemessen wird, wobei die Quelle in Form einer ebenen, leuchtenden, geometrischen Figur erscheint, die eine gekrümmte Kurve (23, 23', 24, 24'; 71, 72, 73, 74) umfaßt, welche in bezug auf eine Achse (22) symmetrisch ist, **dadurch gekennzeichnet**, daß diese gekrümmte Kurve in Bezug auf eine andere Achse (21) symmetrisch ist und zumindest eine erste Dicke ($e_1$) auf einer Seite einer ersten (21) der beiden Achsen und zumindest eine zweite Dicke ($e_2$) auf der anderen Seite dieser Achse aufweist.

2. Leuchtende Quelle nach Anspruch 1, dadurch gekennzeichnet, daß außerdem beidseits der zweiten Achse (22) die gekrümmte Kurve unterschiedliche Dicken ($e_4 - e_7$) aufweist.

3. Leuchtende Quelle nach Anspruch 1 oder 2, dadurch gekennzeichnet, daß die geometrische Figur außerdem ein geradliniges Segment (25) mit einer vorbestimmten Dicke ($e_3$) umfaßt, das sich von den genannten Dicken ($e_1 - e_2$) unterscheidet und entlang einer der Symmetrieachsen (22) die beiden Schnittpunkte (26, 27) der gekrümmten Kurve mit der Achse verbindet.

4. Leuchtende Quelle nach einem der Ansprüche 1 bis 3, dadurch gekennzeichnet, daß die gekrümmte Kurve eine Raute ist.

5. Leuchtende Quelle nach einem der Ansprüche 1 bis 4, welche eine primäre Lichtquelle umfaßt, die eine Maske (50) beleuchtet, die entsprechend einer Figur (52) gemäß einem der varangehenden Ansprüche durchbrochen ist.

6. Optische Meßeinrichtung zur Bestimmung der Lage eines Körpers, mit zumindest einer leuchtenden Quelle, einer optischen Einheit und einem linearen Fühlerelement, in der die Lage des Körpers durch die Position zumindest eines von der leuchtenden Quelle stammenden Lichtflecks auf dem linearen Fühlerelement gemessen wird, wobei die optische Einheit direkt oder indirekt das von der Quelle ausgehende Licht empfängt, um dieses direkt oder indirekt zu dem linearen Fühlerelement zu leiten, dadurch gekennzeichnet, daß die leuchtende Quelle (20) entsprechend einem der Ansprüche 1 bis 5 ausgebildet ist.

7. Meßeinrichtung nach Anspruch 6, in der ein ebener Relaisspiegel (12) auf dem Körper befestigt ist, dadurch gekennzeichnet, daß das lineare Element (16) außerdem

– derart angeordnet ist, daß in einer sogenannten neutralen Lage des Körpers die Abbildung der ersten Achse (21) kolinear mit dem linearen Element (16) ist,

– die Lage der Schnittpunkte (30, 30') der Abbildung ($20_i$) der gekrümmten Kurve (23, 23', 24, 24' ; 71, 72, 73, 74) und gegebenenfalls des Schnittpunkts (31) des Segments (25) feststellt,

– die Dicke ($e_1 - e_7$) dieser Schnittpunkt mißt

– und an einen Rechner (90) angeschlossen ist.

8. Vorrichtung nach Anspruch 7, die außerdem zwischen dem Spiegel (12) und dem linearen Element (16) eine optische Einheit (13) und eine halbreflektierende Lamelle (14) aufweist, die geeignet ist, einerseits einen Teil des von der Quelle (20) ausgehenden Lichts zu der optischen Einheit (13) zu reflektieren und andererseits einen Teil des von der optischen Einheit stammenden Lichts zum Meßwertgeber (16) durchzulassen.

9. Meßeinrichtung nach einem der Ansprüche 6 bis 8, dadurch gekennzeichnet, daß das lineare Element und die Meßmittel zumindest teilweise aus einer CCD-Photoelement-Anordnung bestehen.

**Claims**

1. Light source for a body position optical sensor, which position being measured by the relative position or positions of light spots from the source on a linear sensing member, the source being in the form of a plane luminous geometrical figure comprising a curve ( 23, 23', 24, 24' ; 71, 72, 73, 74) symmetrical relative to an axis (22), characterised in that the curve is symmetrical relative to another axis (21) and has at least a first thickness ($e_1$) on one side of a first (21) of the two axes and at least a second thickness ($e_2$) on the other side of that axis.

2. Light source according to claim 1 characterised in that said curve has different thicknesses ($e_4 - e_7$) to either side of the second axis (22).

3. Light source according to either of claims 1 and 2 characterised in that the geometrical figure further comprises a rectilinear segment (25) of predetermined thickness ($e_3$) different from said thicknesses ($e_1$, $e_2$) joining along one of said axes of symmetry (22) the two points of intersection (26, 27) of the curve with said axis.

4. Light source according to any one of claims 1 to 3 characterised in that said curve is a lozenge.

5. Light source according to any one of claims 1 to 4 comprising a primary light source illuminating a mask (50) with appertures according to a figure (52) according to any one of the preceding claims.

6. Optical device for measuring the position of a body comprising at least one light source, an optical system and a linear sensing member in which the position of the body is measured by the position of at least one light spot from the light source on the linear sensing member, the optical system receiving directly or indirectly the light from the source to transmit it directly or indirectly to the linear sensing member, characterised in that the light source (20) is according to any one of claims 1 to 5.

7. Device according to claim 6 wherein a plane mirror (12) is mounted on the body characterised in that the linear member (16) :

– is so disposed that in a so-called neutral position of the body the image of said first axis (21) is colinear with the linear member (16),

– senses the position of the points of intersection (30, 30′) of the image $(20_i)$ of the curve (23, 23′, 24, 24′ ; 71, 72, 73, 74) and, where applicable, that (31) of the segment (25),

– measures the thickness $(e_1 - e_7)$ of said points of intersection,

– and connected to computing means (90 ).

8. Device according to claim 7 further comprising an optical system (13) disposed between the mirror (12) and the linear member (16) and a semireflective mirror (14) adapted to reflect some of the light from the source (20) to the optical system (13) and to allow some of the light from the optical system to pass to the sensor (16).

9. Device according to any one of claims 6 to 8 characterised in that the linear member and the measuring means are at least partially constituted by a strip of charge-transfer photosensitive elements.

# FIG.1

EP 0 319 396 B1

FIG. 2

FIG. 3

FIG. 4

FIG.6

FIG.5